# FASCICULE DE BREVET EUROPEEN

(11) **EP 2 661 335 B1**
(45) Date de publication et mention de la délivrance du brevet: **01.05.2019**
(21) Numéro de dépôt: 12700551.0
(22) Date de dépôt: 06.01.2012
(51) Int. Cl.: B23K 9/235, B23K 9/028, B23K 9/23, B23P 6/00, B23K 9/00, G05B 19/18, E01B 31/18, B23K 9/095, B23K 101/26

(54) **AUTOMATE POUR LA MAINTENANCE DE RAILS ET PROCEDE DE MISE EN OEUVRE**
AUTOMAT ZUR WARTUNG VON SCHIENEN UND VERFAHREN ZU SEINEM EINSATZ
AUTOMATON FOR RAIL MAINTENANCE, AND IMPLEMENTATION METHOD

(30) Priorité: 06.01.2011 FR 1150105
(43) Date de publication de la demande: 13.11.2013
(73) Titulaire: CTF France, 91924 Bondoufle Cedex (FR)
(72) Inventeur: SAURON, Jean, F-91210 Draveil (FR)
(74) Mandataire: Icosa
(86) Numéro de dépôt international: PCT/EP2012/050183
(87) Numéro de publication internationale: WO 2012/093168

(56) Documents cités:
- EP-A1- 1 145 793
- EP-A2- 0 369 891
- "Neues Schweissverfahren für die Reparatur beschädigter Eisenbahnschienen", SCHWEISSEN UND SCHNEIDEN, DVS VERLAG, DUSSELDORF, DE, vol. 62, no. 12, 1 décembre 2010 (2010-12-01), pages 672-673, XP001562843, ISSN: 0036-7184

## Description

La présente invention se rapporte à la maintenance et à la réparation des usures des rails, par exemple des rails de réseaux de chemins de fer.

Plus précisément, la présente invention se rapporte à un procédé pour la réparation et l'entretien de rails et appareils de voie, ainsi qu'à un dispositif muni de moyens de mise en oeuvre dudit procédé.

La circulation de véhicules tels que les trains induit une usure des rails qui les supportent. Cette usure se manifeste par exemple par des rayures ou des creux dans la surface des rails. Afin de conserver les voies ferrées en état de fonctionnement, il convient de combler ces rayures ou ces creux.

Afin d'assurer l'entretien des rails, il est notamment connu d'utiliser des automates spécialement conçus pour réparer ces creux, en les comblant à l'aide d'un matériau de soudure.

Par exemple, le brevet EP 1 145 793 décrit un automate de soudage à l'arc électrique pour la maintenance des rails. Cet automate comporte un bâti, un appareillage de soudage incluant une torche pour souder une zone de rail, ainsi qu'une unité de commande.

Le matériau de soudure alimentant la torche est constitué par des fils fourrés. Les fils fourrés sont des éléments allongés comprenant un métal d'apport pour la soudure à l'arc. Un fil comprend typiquement une gaine métallique entourant une âme composée de minéraux sous forme de poudre. Au cours du soudage, la gaine fond et se mélange à l'âme, qui comprend par exemple des anti-oxydants ou des additifs métalliques destinés à conférer certaines propriétés physiques à la soudure. Entre l'âme et la gaine est éventuellement interposé un gaz favorable à la soudure.

Selon le brevet EP 1 145 793, la torche à souder est munie de moyens de déplacement selon deux axes situés dans un plan horizontal. Cette mobilité dans deux dimensions permet un procédé de soudage comportant une étape d'enregistrement manuel des coordonnées d'au moins trois points, définissant une surface de rail à réparer, puis une étape durant laquelle l'automate procède à cette réparation.

Toutefois, il arrive qu'une portion de rail comporte une multitude de petites zones d'usure qui nécessitent une réparation, sans qu'il soit pour autant utile de traiter la totalité de ladite portion.

La présente invention permet de résoudre ce problème en proposant un procédé de soudage selon la revendication 1.

L'invention a également pour objet un automate de soudage à l'arc électrique approprié à la mise en oeuvre d'un tel procédé, selon la revendication 5.

La plupart des surfaces de rails ou appareils de voie subissant des dégradations sont sensiblement disposées selon un plan horizontal. Cependant, certaines pièces d'appareil de voie, notamment les pointes de coeurs de croisement, présentent des surfaces tridimensionnelles. Il convient donc de modifier la hauteur de la torche en cours d'intervention.

A cet effet, selon un mode de réalisation préférentiel de l'invention, la torche est munie de moyens de déplacement selon trois dimensions par rapport au bâti et les coordonnées spatiales des zones de travail sont définies dans un repère à trois dimensions.

Le soudage s'effectue préférentiellement par dépôts successifs de bandes de matériau de soudure, ces bandes étant appelées cordons.

Selon un mode de réalisation de l'invention, le dépôt des cordons s'effectue en déplaçant la torche de manière rectiligne, selon un axe dont les coordonnées peuvent être choisies par l'opérateur. Selon une variante, la torche effectue en outre un déplacement sinusoïdal autour d'un axe principal de déplacement. On obtient alors des cordons de soudage en forme de vague, de dents de scie ou de créneaux.

Certains rails et/ou appareils de voie, notamment en acier de fonderie au manganèse, nécessitent de travailler à une température relativement faible, notamment inférieure à 250 °C, afin de conserver leurs propriétés mécaniques. Il est donc important que le procédé de soudage utilisé évite un échauffement trop important du métal du rail.

Le procédé selon l'invention permet de résoudre ce problème. Selon ce procédé, le programme de soudage comporte les étapes suivantes :
- la torche dépose successivement un premier cordon de soudage sur chacune des surfaces de travail distinctes ;
- puis la torche dépose successivement un autre cordon de soudage sur chacune desdites surfaces de travail non encore couvertes en totalité ;
ladite dernière étape étant répétée tant qu'au moins une des surfaces de travail n'est pas encore couverte en totalité.

Ce mode de dépôt, cordon par cordon, évite une surchauffe locale du métal au cours du soudage. Une telle surchauffe pourrait avoir lieu sur une surface traitée en totalité avant le passage à une surface distincte. Le traitement successif de chaque surface de travail, cordon par cordon, permet à chaque cordon de refroidir avant le dépôt d'un cordon juxtaposé.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : une vue en perspective d'un automate selon un mode de réalisation de l'invention ;
- Figure 2 : une vue schématique d'un élément de l'automate représenté à la figure 1 ;
- Figures 3 et 4 : vues schématiques d'une zone de travail de l'automate représenté à la figure 1.

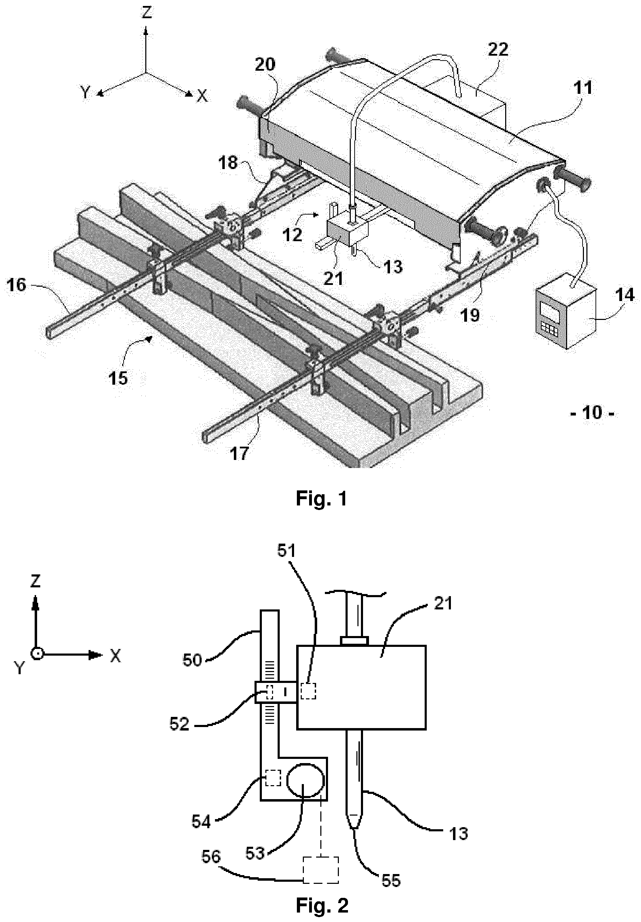

La figure 1 représente une vue en perspective d'un automate 10 selon un mode de réalisation de l'invention. L'automate 10 comporte notamment un bâti 11, un appareillage 12 de soudage comprenant notamment une torche 13, ainsi qu'une unité 14 de commande et de contrôle du soudage.

Sur la figure 1, l'automate est représenté en position sur un appareil de voie 15 à réparer.

Le bâti 11 a sensiblement la forme d'un parallélépipède rectangle. A des fins de compréhension, on considère un repère cartésien comportant trois axes (X, Y, Z) représentés sur la figure 1. Les arêtes du bâti 11 sont sensiblement disposées selon les axes (X, Y, Z). L'axe Z représente la verticale, l'axe X est sensiblement parallèle à un axe de roulement sur l'appareil 15 de voie.

L'automate 10 est équipé de deux moyens de maintien sur l'appareil de voie 15 à réparer. Dans l'exemple représenté à la figure 1, chacun de ces moyens comporte une barre (16, 17) horizontale, sensiblement disposée selon l'axe Y et munie d'un dispositif d'étau coulissant. L'étau peut être serré de part et d'autre de l'appareil 15 de voie, afin de fixer chaque barre (16, 17) sur l'appareil de voie. Le bâti 11 est équipé de patins (18, 19) qui permettent à un opérateur de faire coulisser ledit bâti sur les barres (16, 17), de sorte à positionner convenablement l'appareillage 12 de soudage au-dessus de l'appareil 15 de voie, avant de mettre en route l'automate.

Selon la configuration du rail ou de l'appareil de voie à réparer, d'autres moyens de maintien de l'automate sur ledit rail ou ledit appareil de voie peuvent être utilisés. Les moyens de maintien décrits dans le document EP 1 145 793 sont notamment utilisables dans le cadre de la présente invention.

La configuration des moyens (16, 17) de maintien induit que le bâti 11 se trouve en porte à faux par rapport à l'appareil 15 de voie. L'appareillage 12 de soudage est situé au niveau d'une face 20 latérale du bâti, ladite face étant sensiblement disposée selon les axes (X, Z). L'appareillage 12 de soudage est notamment situé entre les barres (16, 17). Ainsi, la torche 13 peut être positionnée à la verticale du rail ou de l'appareil de voie à réparer.

Selon une variante, les moyens de maintien sur l'appareil de voie comportent des barres verticales ou légèrement inclinées par rapport à la verticale, sur lesquelles peuvent coulisser les patins (18, 19). Dans cette configuration, la torche 13 peut être disposée horizontalement, en direction d'une face latérale du rail ou de l'appareil de voie, et non au-dessus de ces derniers. Cette configuration verticale de l'automate 10 est par exemple utilisé pour le soudage latéral d'aiguilles mobiles d'aiguillages.

La torche 13 est reliée à un support 21 et connectée à un système 22 d'alimentation en fils fourrés. Une torche et un système d'alimentation analogues sont notamment décrits dans le document EP 1 145 793.

Par ailleurs, la torche 13 et le bâti 11 sont reliés électriquement à un onduleur (non représenté) qui génère l'arc électrique de soudage.

Le support 21 est équipé de moyens de déplacement de la torche 13 par rapport au bâti 11, sur une certaine distance selon les axes (X, Y) horizontaux, ainsi que selon l'axe Z vertical. La distance que peut couvrir la torche 13 par rapport au bâti 11 est par exemple de 2000 mm selon l'axe X, 400 mm selon l'axe Y et 100 mm selon l'axe Z. Ces valeurs sont données uniquement à titre indicatif.

La figure 2 montre une vue détaillée de la torche 13 et du support 21 représentés à la figure 1. Le support 21 est notamment relié à une crémaillère 50, disposée selon l'axe Z. Un moteur 51 permet de déplacer le support 21 et la torche 13 le long de la crémaillère 50, au moyen d'une roue dentée 52. Selon une variante de l'invention, le déplacement selon l'axe Z n'est pas motorisé ; le moteur 51 est remplacé par un système de clé qui permet de régler manuellement la position de la torche selon l'axe Z. Un tel système est décrit dans le document EP 1 145 793.

La crémaillère 50 est elle-même reliée à une tige 53 orientée selon l'axe Y. Un moteur 54 permet de déplacer la crémaillère 50 le long de la tige 53, par exemple par un système de crémaillère ou de vis sans fin.

La tige 53 est elle-même reliée au bâti 11 et mobile par rapport audit bâti selon l'axe X, via un système comportant un moteur 56.

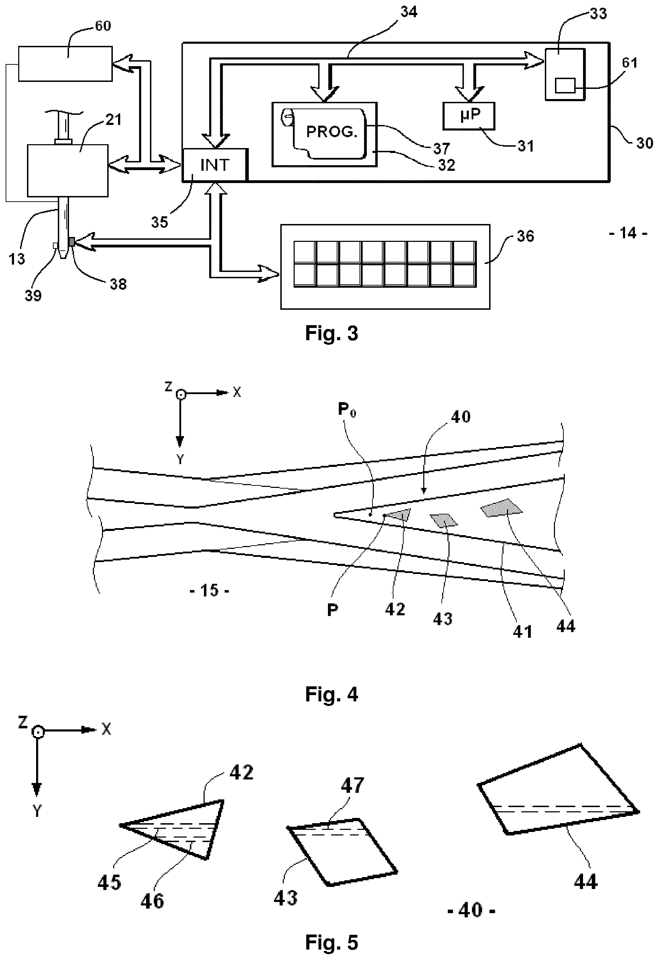

La mise en oeuvre du soudage est gérée par l'unité 14 de commande et de contrôle du soudage. L'unité 14 est représentée schématiquement sur la figure 3.

L'unité 14 comporte notamment un dispositif 30 de gestion de l'automate 10. Le dispositif 30 comprend un microprocesseur 31, une mémoire 33 de données, une mémoire 32 de programme et au moins un bus 34 de communication.

Par une interface 35, le dispositif 30 est notamment relié à un clavier 36 disposé sur une façade de l'unité 14. Ce clavier permet à un opérateur de communiquer des instructions au dispositif 30.

Le dispositif 30 est également relié à un capteur 38 de position, situé sur la torche 13.

La mémoire 32 contient un programme 37 de soudage, dont certaines caractéristiques seront développées ci-après.

Le programme 37 communique des instructions à la torche 13 et/ou à son support 21 par l'intermédiaire de l'interface 35. Le programme 37 peut notamment actionner les moteurs (51, 54, 56) pour déplacer la torche selon les axes X, Y et Z.

Le dispositif 30 contrôle également l'onduleur 60 qui génère l'arc électrique.

Avec une telle unité 14 de commande et de contrôle de l'automate 10, une opération de maintenance ou de réparation d'un rail ou appareil de voie tel que l'appareil 15 est par exemple effectuée de la manière suivante :
Tout d'abord, un opérateur positionne l'automate 10 sur l'appareil 15 de voie, comme représenté sur la figure 1. L'opérateur règle ensuite la position des patins (18, 19) du bâti par rapport aux barres (16, 17), de manière à ce que la torche 13 se trouve sensiblement au-dessus d'une zone de l'appareil de voie 15 à réparer. A titre d'exemple, une vue de dessus d'une zone 40 à réparer est représentée à la figure 4.

Dans l'exemple représentée à la figure 4, la zone 40 est située sur un coeur 41 de croisement appartenant à l'appareil de voie 15. Le coeur 41 de croisement comporte plusieurs surfaces (42, 43, 44) usées en creux, par exemple du fait de la circulation de trains. Il convient de combler ces creux au moyen d'un matériau de soudage distribué par la torche 13.

A cet effet, l'opérateur positionne la torche 13, munie de son capteur 38 de position, à la verticale d'un point P₀ de référence. Ce point P₀ est par exemple situé au bord d'une surface (42, 43, 44) ou à proximité d'une de ces surfaces. Préférentiellement, l'opérateur positionne une extrémité 55 inférieure de la torche au contact du point P₀.

Pour positionner la torche 13 au contact du point P₀, l'opérateur déplace la torche 13 par rapport au bâti 11, par exemple en actionnant les moyens (51, 54, 56) de déplacement portés par le support 21. Cet actionnement se fait par exemple par l'intermédiaire du clavier 36.

La position du point P₀ par rapport aux axes (X, Y, Z) est mémorisée dans la mémoire 33. Cette position est préférentiellement enregistrée en actionnant une commande du clavier 36 alors que le nez 55 de la torche est au contact du point P₀.

Ensuite, par rapport au point P₀ et aux axes (X, Y, Z), l'opérateur enregistre les coordonnées d'une série de points P correspondants aux sommets de polygones délimitant les surfaces (42, 43, 44) à traiter. Ces surfaces (42, 43, 44) peuvent être juxtaposées ou bien éloignées les unes des autres d'une certaine distance.

Par ailleurs, une surface (42, 43, 44) de travail peut être un polygone quelconque, défini par un nombre supérieur ou égal à 3 de points P.

Les coordonnées des surfaces (42, 43, 44) sont préférentiellement enregistrées en positionnant le nez 55 de la torche au contact de chaque point P et en actionnant simultanément une commande du clavier 36.

Préférentiellement, le capteur 38 est apte à déterminer les coordonnées de chaque point P selon les trois axes (X, Y, Z), et non uniquement selon les axes (X, Y).

En effet, il arrive que les éléments d'appareils de voie tels que les coeurs 41 de croisement présentent des surfaces tridimensionnelles. Les surfaces (42, 43, 44) à traiter ne sont pas nécessairement situées dans un plan horizontal.

Selon un mode de réalisation de l'invention, l'opérateur peut présélectionner une direction de déplacement de la torche 13 durant le soudage, par exemple selon l'axe X (soudage longitudinal) ou Y (transversal). Ce type de soudage longitudinal ou transversal est particulièrement adapté au soudage d'un rail.

Selon un autre mode de réalisation de l'invention, lors de l'enregistrement des coordonnées de points P définissant une surface 42, l'opérateur peut choisir deux points P qui définissent une direction de déplacement de la torche 13 durant le soudage. Une telle direction peut être quelconque par rapport aux axes (X, Y) ou (X, Y, Z). Ce mode de réalisation est particulièrement adapté aux appareils de voie, qui peuvent présenter des formes particulières.

Avant d'activer le programme de soudage, l'opérateur définit les paramètres de soudage. Ces paramètres sont notamment la tension de travail, le courant, la vitesse de dévidage de fil et la vitesse de déplacement de la torche par rapport au bâti. Un autre paramètre est le « stick-out », c'est-à-dire la hauteur de la torche par rapport à la surface de travail, qui correspond à la hauteur de l'arc électrique.

Préférentiellement, la mémoire 33 intègre des « profils de fusion » 61 correspondant à chaque type de fil fourré identifié par le dispositif 30. En effet, les fils fourrés sont développés spécifiquement en fonction de la nature du métal de la pièce à souder. Pour chaque type de fil fourré, on peut identifier une corrélation optimale entre les paramètres de soudage définis ci-dessus. Ces données sont intégrées à la mémoire 33.

Ainsi, préférentiellement, l'opérateur sélectionne au moyen du clavier 36 le type de fil fourré équipant l'automate 10. Ainsi, le programme 37 de soudage mettra en oeuvre automatiquement une combinaison optimale de paramètres adaptée à ce type de fil.

Selon un mode de réalisation de l'invention, pour chaque type de fil, le programme 37 met en oeuvre une combinaison optimale par défaut des paramètres. L'opérateur peut choisir de modifier manuellement l'un de ces paramètres, par exemple la vitesse de dévidage de fil. Le programme 37 adapte alors automatiquement les autres paramètres en fonction du profil 61.

Lorsque l'ensemble des surfaces (42, 43, 44) est défini dans un repère (P₀, X, Y, Z) et que les paramètres de soudage sont définis, l'opérateur peut activer le programme 37 de soudage. Ce dernier met en oeuvre les moyens (51, 54, 56) de déplacement par rapport au bâti 11 portés par le support 21, de manière à positionner la torche à la verticale d'une première surface 42 de travail. Un agrandissement des surfaces (42, 43, 44) est représenté à la figure 5.

La torche 13 dépose un premier cordon 45 de soudure sur la surface 42. La vitesse de déplacement de la torche et son alimentation par le système 22 sont gérés par le programme 37, en fonction du profil 61 enregistré dans la mémoire 33. Dans l'exemple représenté à la figure 5, le cordon 45 est déposé de manière rectiligne, selon l'axe X pour correspondre avec une direction de roulement de l'appareil 15 de voie.

Selon un mode de réalisation de l'invention, l'appareil 15 de voie est en acier au carbone. Il est alors souhaitable que l'opération de soudage soit effectuée à une température élevée, notamment supérieure à 300 °C.

Dans ce cas, avant le dépôt du premier cordon 45, le programme 37 comporte une étape de préchauffage de la surface 42. Un tel préchauffage peut être effectué par rampe aéro-gaz ou par induction magnétique.

Après le dépôt du premier cordon 45, la torche 13 dépose une succession de cordons 46 parallèles sur la surface 42, jusqu'à la recouvrir complètement. Préférentiellement, deux cordons voisins se recouvrent partiellement. Selon le cas, une ou plusieurs couches de métal peuvent être déposées sur la surface 42.

Les mêmes opérations de préchauffage puis recouvrement sont répétées sur les autres surfaces (43, 44).

Des opérations de finition par meulage ou usinage peuvent ensuite être effectuées. Préférentiellement, durant le soudage, le programme 37 régule la tension et le courant de l'arc électrique, ainsi que la vitesse de dépôt du métal d'apport, afin d'optimiser le volume de métal déposé pour minimiser les opérations de finition. Cette régulation s'effectue en fonction des données du profil 61 du fil utilisé.

Selon un autre mode de réalisation de l'invention, l'appareil 15 de voie est en acier de fonderie au manganèse. Il est alors souhaitable que l'opération de soudage soit effectuée à une température relativement faible, notamment inférieure à 250 °C.

Dans ce cas, après le dépôt du premier cordon 45 sur la surface 42, le programme 37 commande le déplacement de la torche 13 au-dessus d'une autre surface 43 à traiter, ladite surface 43 étant préférentiellement à l'écart de la surface 42. La torche 13 dépose alors un cordon 47 de soudure sur la surface 43, ledit cordon étant préférentiellement rectiligne et parallèle au cordon 45. La torche se déplace ensuite au-dessus d'une autre surface 44 et répète l'opération de dépôt d'un cordon.

Lorsque toutes les surfaces (42, 43, 44) de travail mémorisées ont reçu un premier cordon de soudure, la torche 13 dépose un deuxième cordon 46 de soudure sur la première surface 42.

Le temps écoulé entre le dépôt des cordons 45 et 46 permet au coeur 41 de croisement de refroidir au niveau de la surface 42, de manière à maintenir sa température au-dessous de 250 °C.

Les opérations de dépôts de cordons sur chacune des surfaces, sont répétées jusqu'à recouvrement total de chacune desdites surfaces.

Les surfaces (42, 43, 44) de travail sont donc successivement traitées, cordon par cordon, de manière à pouvoir refroidir entre les dépôts de chacun des cordons.

Des opérations de finition par meulage ou usinage peuvent ensuite être effectuées. Préférentiellement, durant le soudage, le programme 37 régule la tension et le courant de l'arc électrique, ainsi que la vitesse de dépôt du métal d'apport, afin d'optimiser le volume de métal déposé pour minimiser les opérations de finition.

Selon une variante de l'invention, en cours de soudage, la torche se déplace selon une direction principale rectiligne - par exemple l'axe X - et effectue en outre un mouvement de va et vient sur une certaine distance selon l'axe Y. On obtient alors un cordon de soudage de forme sinusoïdale, ou en créneaux.

Un tel mouvement d'oscillation permet d'obtenir un dépôt plus plat sur les surfaces de travail, en réglant la vitesse d'oscillation par rapport à la vitesse de déplacement de la torche selon sa direction principale et la vitesse de dévidage du fil. Un tel dépôt plus plat limite les opérations de meulage par rapport à un cordon rectiligne, qui présente en général une forme bombée.

Selon la revendication 5, l'automate 10 comporte une sonde de température qui permet de relever la température du rail ou de l'appareil de voie au cours du procédé de soudage.

Une sonde 39 de température (figure 3) est par exemple portée par la torche 13 et reliée au dispositif 30 de gestion, via l'interface 35. Il s'agit préférentiellement d'une sonde infra-rouge.

Dans le cas d'un soudage d'acier au carbone, la sonde 39 peut par exemple contrôler que la surface de travail est suffisamment chaude, par exemple au-dessus de 300 °C, avant de lancer le dépôt d'un cordon.

Un tel contrôle de la température est également utile dans le cas d'un coeur de croisement en acier au manganèse, afin de contrôler que l'échauffement du métal ne dépasse pas un seuil prédéterminé, par exemple 250 °C. Le programme 37 peut notamment retarder le dépôt d'un deuxième cordon 46 sur une surface 42 de travail tant que le premier cordon 45 n'a pas refroidi suffisamment.

Un automate selon l'invention est adapté à la maintenance et à la réparation de tout type de rail et/ou appareil de voie, notamment des rails de chemin de fer, de tramway ou de métro. Les opérations de soudage peuvent s'effectuer en atelier en intérieur, mais également sur chantier en extérieur, sans qu'il soit nécessaire de démonter les rails et/ou appareils de voie à réparer.

## Revendications

1. Procédé de soudage d'une zone (40) localisée d'un rail ou d'un appareil (15) de voie, le procédé comprenant les étapes suivantes :
- on positionne le long d'au moins un rail ou d'un appareil (15) de voie un automate (10) de soudage à l'arc électrique, ledit automate (10) incluant un bâti (11) et une torche (13) de soudage alimentée en fils fourrés, ladite torche étant munie de moyens (54, 56) de déplacement selon au moins deux dimensions par rapport au bâti ;
- on place la torche dans une position (P₀) de référence par rapport à la zone à souder ;
- dans un repère à au moins deux dimensions (X, Y), on relève des coordonnées spatiales de points (P) formant au moins deux polygones définissant au moins deux surfaces (42, 43, 44) de travail distinctes à l'intérieur de la zone à souder ;
- on déclenche un programme (37) de soudage qui induit un déplacement de la torche par rapport au bâti, de sorte à intervenir successivement sur l'ensemble desdites surfaces de travail distinctes,
le procédé étant **caractérisé en ce que**, au cours du soudage, le déplacement de la torche est tel que :
- la torche dépose successivement un premier cordon (45, 47) de soudage sur chacune des surfaces (42, 43, 44) de travail distinctes ;
- puis la torche dépose successivement un autre cordon (46) de soudage sur chacune desdites surfaces de travail non encore couvertes en totalité ;
ladite dernière étape étant répétée tant qu'au moins une des surfaces de travail n'est pas encore couverte en totalité.

2. Procédé selon la revendication 1, **caractérisé en ce que** :
- les coordonnées spatiales des surfaces de travail sont définies dans un repère à trois dimensions (X, Y, Z) ;
- la torche (13) est munie de moyens (51, 54, 56) de déplacement selon trois dimensions par rapport au bâti (11).

3. Procédé selon la revendication 1 ou la revendication 2, tel que les cordons déposés par la torche sont rectilignes et sensiblement parallèles à une même direction principale de déplacement de la torche.

4. Procédé selon la revendication 3, tel qu'avant de déclencher le programme (37) de soudage, on choisit deux points (P) dont les coordonnées déterminent une direction principale de déplacement de la torche durant le soudage.

5. Automate (10) de soudage à l'arc électrique pour la maintenance ou la réparation de rails et appareils de voie, l'automate comprenant un bâti (11), un appareillage (12) de soudage incluant une torche (13) à souder, le bâti étant pourvu d'au moins deux moyens (16,17) d'appui sur un rail ou un appareil de voie,
la torche comprenant des moyens (54, 56) de déplacement sur au moins deux axes horizontaux,
l'automate étant pourvu de moyens (14, 37) permettant de réaliser les étapes suivantes :
- dans un repère à au moins deux dimensions, mémorisation de coordonnées spatiales de points (P) formant au moins deux polygones définissant au moins deux surfaces (42, 43, 44) de travail distinctes à l'intérieur d'une zone (40) à souder ;
- mise en oeuvre d'un programme (37) de soudage comprenant un déplacement de la torche par rapport au bâti, de sorte à intervenir successivement sur l'ensemble desdites surfaces de travail distinctes, l'automate étant **caractérisé en ce que** :
- il comprend une sonde (39) de température qui permet de relever la température du rail ou de l'appareil de voie au cours du procédé de soudage ;
- le programme (37) de soudage n'autorise le dépôt d'un cordon de soudage que si la température du rail est située dans une plage déterminée en fonction du type de métal de la zone à souder.

6. Automate selon la revendication 5, tel que :
- la torche est munie de moyens (51, 54, 56) de déplacement selon deux axes horizontaux et un axe vertical ;
- les coordonnées spatiales des zones de travail sont définies dans un repère à trois dimensions.

7. Automate selon l'une des revendications 5 à 6, tel que le programme de soudage régule des paramètres de soudage en fonction de caractéristiques (61) mémorisées dans une mémoire (33) et correspondant spécifiquement au fil fourré équipant l'automate, lesdits paramètres de soudage comprenant des paramètres choisis parmi la tension de travail, le courant, la vitesse de dévidage du fil fourré, la vitesse de déplacement de la torche par rapport au bâti et la hauteur de l'arc électrique.

## Patentansprüche

1. Verfahren zum Schweißen einer lokalisierten Zone (40) einer Schiene oder einer Weiche (15), wobei das Verfahren die folgenden Schritte umfasst:
- Positionieren eines Lichtbogenschweißautomaten (10) entlang mindestens einer Schiene oder einer Weiche (15), wobei der Automat (10) ein Gestell (11) und einen Schweißbrenner (13), der mit Fülldraht versorgt wird, aufweist, wobei der Brenner mit Mitteln (54, 56) zum Verlagern entlang von mindestens zwei Dimensionen bezüglich des Gestells versehen ist;
- Platzieren des Brenners in einer Bezugsposition (Po) bezüglich der zu schweißenden Zone;
- in einer Markierung mit mindestens zwei Dimensionen (X, Y) Erheben räumlicher Koordinaten von Punkten (P), die mindestens zwei Polygone bilden, die mindestens zwei getrennte Arbeitsoberflächen (42, 43, 44) in dem Inneren der zu schweißenden Zone definieren;
- Auslösen eines Schweißprogramms (37), das eine Verlagerung des Brenners bezüglich des Gestells derart induziert, dass sukzessive auf sämtlichen der getrennten Arbeitsoberflächen eingegriffen wird,
wobei das Verfahren **dadurch gekennzeichnet ist, dass** im Laufe des Schweißens die Verlagerung des Brenners derart ist, dass:
- der Brenner sukzessive eine erste Schweißnaht (45, 47) auf jeder der getrennten Arbeitsoberflächen (42, 43, 44) abscheidet;
- der Brenner dann sukzessive eine andere Schweißnaht (46) auf jeder der Arbeitsoberflächen, die noch nicht vollständig bedeckt sind, abscheidet;
wobei der letzte Schritt so lange wiederholt wird, wie mindestens eine der Arbeitsoberflächen noch nicht vollständig bedeckt ist.

2. Verfahren nach Anspruch 1, **dadurch gekennzeichnet, dass**:
- die räumlichen Koordinaten der Arbeitsoberflächen in einer Markierung mit drei Dimensionen (X, Y, Z) definiert sind;
- der Brenner (13) mit Verlagerungsmitteln (51, 54, 56) entlang von drei Dimensionen bezüglich des Gestells (11) versehen ist.

3. Verfahren nach Anspruch 1 oder Anspruch 2, wobei die von dem Brenner abgeschiedenen Nähte geradlinig und im Wesentlichen zu einer selben Hauptverlagerungsrichtung des Brenners parallel sind.

4. Verfahren nach Anspruch 3, wobei vor dem Auslösen des Schweißprogramms (37) zwei Punkte (P), deren Koordinaten eine Hauptverlagerungsrichtung des Brenners während des Schweißens bestimmen, ausgewählt werden.

5. Lichtbogenschweißautomat (10) für die Wartung oder die Reparatur von Schienen und Weichen, wobei der Automat ein Gestell (11), eine Schweißapparatur (12), die einen Schweißbrenner (13) aufweist, umfasst, wobei das Gestell mit mindestens zwei Mitteln (16, 17) zum Aufliegen auf einer Schiene oder einer Weiche versehen ist,
wobei der Brenner Mittel (54, 56) zum Verlagern auf mindestens zwei horizontalen Achsen umfasst,
wobei der Automat mit Mitteln (14, 37) versehen ist, die es erlauben, die folgenden Schritte auszuführen:
- in einer Markierung mit mindestens zwei Dimensionen Speichern räumlicher Koordinaten von Punkten (P), die mindestens zwei Polygone bilden, die mindestens zwei getrennte Arbeitsoberflächen (42, 43, 44) in dem Inneren einer zu schweißenden Zone (40) definieren;
- Umsetzen eines Schweißprogramms (37), das ein Verlagern des Brenners bezüglich des Gestells derart umfasst, dass sukzessive auf sämtlichen der getrennten Arbeitsoberflächen eingegriffen wird,
wobei der Automat **dadurch gekennzeichnet ist, dass**:
- er eine Temperatursonde (39) umfasst, die es erlaubt, die Temperatur der Schiene oder der Weiche im Laufe des Schweißverfahrens zu erheben;
- das Schweißprogramm (37) das Abscheiden einer Schweißnaht nur gestattet, falls die Temperatur der Schiene in einem Bereich liegt, der in Abhängigkeit von dem Metalltyp der zu schweißenden Zone bestimmt wird.

6. Automat nach Anspruch 5, wobei:
- der Brenner mit Verlagerungsmitteln (51, 54, 56) entlang zweier horizontaler Achsen und einer vertikalen Achse versehen ist;
- die räumlichen Koordinaten der Arbeitszonen in einer Markierung mit drei Dimensionen definiert sind.

7. Automat nach einem der Ansprüche 5 bis 6, wobei das Schweißprogramm Schweißparameter in Abhängigkeit von Merkmalen (61) reguliert, die in einem Speicher (33) gespeichert sind und spezifisch dem Fülldraht, der den Automaten ausstattet, entsprechen, wobei die Schweißparameter Parameter umfassen, die aus der Arbeitsspannung, dem Strom, der Abzuggeschwindigkeit des Fülldrahts, der Verlagerungsgeschwindigkeit des Brenners bezüglich des Gestells und der Höhe des Lichtbogens ausgewählt sind.

## Claims

1. Method for welding a localized area (40) of a rail or a switch gear (15), the method including the following steps:
- positioning along at least one rail or one switch gear (15) an electric arc welding automat (10), said automat (10) including a frame (11) and a welding torch (13) supplied with core welding wire, said torch being provided with means (54, 56) of displacement in the direction of at least two dimensions with respect to the frame;
- placing the torch into a position of reference (Po) with respect to the area to be welded;
- in a reference system having at least two dimensions (X, Y), storing space coordinates of points (P) forming at least two polygons defining at least two distinct working surfaces (42, 43, 44) inside the area to be welded;
- starting a welding program (37) inducing a displacement of the torch with respect to the frame, so as to intervene successively on all said distinct working surfaces,
the method being **characterized in that**, during the welding operation, the displacement of the torch is such that:
- the torch successively deposits a first weld seam (45, 47) onto each distinct working surface (42, 43, 44);
- then the torch successively deposits another weld seam (46) onto each said working surface not yet entirely covered;
said last step being repeated as long as at least one of the working surfaces is not entirely covered.

2. Method according to claim 1, **characterized in that**:
- the space coordinates of the working surfaces are defined in a reference system having three dimensions (X, Y, Z);
- the torch (13) is provided with means (51, 54, 56) of displacement in three dimensions with respect to the frame (11).

3. Method according to claim 1 or claim 2, wherein the weld seams deposited by the torch are rectilinear and substantially parallel to the same main direction of displacement of the torch.

4. Method according to claim 3, wherein before starting the welding program (37), two points (P) are selected whose coordinates determine a main direction of displacement of the torch during the welding operation.

5. Electric arc welding automat (10) for maintaining or repairing rails and switch gears, the automat including a frame (11), a welding device (12) including a welding torch (13), the frame being provided with at least two means (16, 17) for the support on a rail or a switch gear,
the torch including means (54, 56) of displacement on at least two horizontal axes,
the automat being provided with means (14, 37) making it possible to carry out the following steps:
- in a reference system having at least two dimensions, storing space coordinates of points (P) forming at least two polygons defining at least two distinct working surfaces (42, 43, 44) inside an area (40) to be welded;
- implementing a welding program (37) including a displacement of the torch with respect to the frame, so as to intervene successively on all said distinct working surfaces, the automat being **characterized in that**:
- it includes a temperature sensor (39) making it possible to measure the temperature of the rail or the switch gear during the welding operation;
- the welding program (37) allows the deposition of a weld seam only if the temperature of the rail is in a determined range according to the type of metal of the area to be welded.

6. Automat according to claim 5, wherein:
- the torch is provided with means (51, 54, 56) of displacement in the direction of two horizontal axes and one vertical axis;
- the space coordinates of the working areas are defined in a reference system having three dimensions.

7. Automat according to any one of the claims 5 to 6, wherein the welding program controls welding parameters according to characteristics (61) stored in a memory (33) and corresponding specifically to the core welding wire the automat is provided with, said welding parameters including the parameters chosen among the working voltage, the current, the unwinding speed of the core welding wire, the travel speed of the torch with respect to the frame and the height of the electric arc.
